# EUROPÄISCHE PATENTSCHRIFT

(11) **EP 4 082 747 B1**
(45) Veröffentlichungstag und Bekanntmachung des Hinweises auf die Patenterteilung: **22.11.2023**
(21) Anmeldenummer: 22167252.0
(22) Anmeldetag: 07.04.2022
(51) Int. Cl.: B29C 45/28

(54) **BETÄTIGUNGSVORRICHTUNG FÜR VERSCHLUSSNADELN IN SPRITZGIESSWERKZEUGEN MIT NADELVERSCHLUSSDÜSEN**
ACTUATING DEVICE FOR CLOSURE NEEDLES IN INJECTION MOULDS WITH NEEDLE CLOSURE NOZZLES
DISPOSITIF D'ACTIONNEMENT POUR POINTEAUX DE FERMETURE DANS DES OUTILS DE MOULAGE PAR INJECTION POURVU DE BUSES DE FERMETURE DE POINTEAU

(30) Priorität: 30.04.2021 DE 102021111302
(43) Veröffentlichungstag der Anmeldung: 02.11.2022
(73) Patentinhaber: Günther Heisskanaltechnik GmbH, 35066 Frankenberg (DE)
(72) Erfinder: GÜNTHER, Herbert, 35108 Allendorf-Rennertehausen (DE); SOMMER, Siegrid, 35099 Burgwald (DE); SCHNELL, Torsten, 35104 Lichtenfels (DE)
(74) Vertreter: Patentanwälte Olbricht Buchhold Keulertz

(56) Entgegenhaltungen:
- WO-A1-2006/080807
- DE-A1- 10 337 520
- DE-A1-102009 048 796
- US-A- 5 531 581

## Beschreibung

Die Erfindung betrifft eine Betätigungsvorrichtung für Verschlussnadeln in Spritzgießwerkzeugen mit Nadelverschlussdüsen gemäß dem Oberbegriff von Anspruch 1. Betätigungsvorrichtungen für Verschlussnadeln sind aus den Patentschriften DE 103 37 520 A1 und DE 10 2009 048796 A1 bekannt.

In Spritzgießwerkzeugen werden oft Nadelverschlussdüsen eingesetzt, um eine fließfähige Masse einem Formwerkzeug dosiert zuzuführen. Die einzelnen Düsen weisen hierzu elektrisch, pneumatisch oder hydraulisch angetriebene Verschlussnadeln auf, die Öffnungen in einem Formeinsatz (Angussöffnungen) periodisch öffnen und verschließen. Die einzelnen Verschlussnadeln sind in einem werkzeugseitigen Bereich des Spritzgießwerkzeugs axial verschiebbar gelagert und mit dem Antrieb verbunden. Im düsenseitigen Bereich werden die Verschlussnadeln entweder mittig durch den Strömungskanal für die zu verarbeitenden Masse geführt oder sie sind zumindest abschnittsweise seitlich neben dem Strömungskanal angeordnet und tauchen erst am Ende des Düsenkörpers in den Strömungskanal ein. Dieser endet in einer Düsenaustrittsöffnung, welche in die Angussöffnung im Werkzeug mündet.

Die Verschlussnadeln können innerhalb des Spritzgießwerkzeugs über jeweils einen direkten Antrieb einzeln bewegt werden. Je nach Anwendungsfall haben sich sogenannte Hubplattenantriebe bewährt (siehe z.B. WO 2007 079 836 A1). Bei diesen werden eine oder mehrere Verschlussnadeln an einem zentral im Werkzeug gelagerten Hubelement befestigt, wobei das Hubelement mittels eines Antriebs und über einen Stellmechanismus in Längsrichtung der Verschlussnadeln auf und ab bewegt wird, so dass mehrere Verschlussnadeln mit nur einem Antrieb synchron bewegt werden können.

Damit eine exakte Führung bzw. Bewegung des Hubelements und damit eine stets synchrone Bewegung aller Verschlussnadeln erfolgt und mithin ein sicheres Abdichten alller Nadelverschlussdüsen realisiert wird, fordert die Anordnung der Verschlussnadeln an dem Hubelement ein relativ geringes Spiel, insbesondere in den Gewindeflanken der Verschlussnadeln. Ferner ist eine sehr präzise Fertigung der Verschlussnadeln notwendig.

Doch selbst bei engsten Fertigungstoleranzen einzelner Bauteile kann durch aufeinander aufbauende Anordnung von Bauteile ein Kettenmaß entstehen, das außerhalb einer gewünschten Toleranz liegt, so dass ein sicheres Verschließen aller Nadelverschlussdüsen nicht erreicht werden kann. Es ist zudem zu beobachten, dass ein Hubelement im dauerhaften Einsatz leichte Kippbewegungen ausführen kann, wodurch einzelne Verschlussnadeln abweichende Relativposition in ihrem jeweiligen Dichtsitz einnehmen können. Dies kann teilweise dadurch noch verstärkt werden, indem einzelne Nadeln zueinander einen leichten längsaxialen Versatz aufweisen, z.B. aufgrund einer leicht unterschiedlichen Einbauhöhe. Folglich können einzelne Nadelverschlussdüsen in einem Merhfach-Spritzgießwerkzeug mit Nadelverschluss ungenau schließen. Ferner ist eine präzise Durchflussregulierung durch einzelne Nadelverschlussdüsen zur Anpassung individueller Durchflüsse schwierig, da eine Anpassung von Strömungsquerschnitten nebst präziser Positionierung der einzelnen Verschlussnadeln notwendig wäre.

Ziel der Erfindung ist es, diese und weitere Nachteile des Standes der Technik zu überwinden und eine Betätigungsvorrichtung für Verschlussnadeln in Spritzgießwerkzeugen mit Nadelverschlussdüsen zu schaffen, die zu einer verbesserten Betätigung von Nadelverschlussdüsen zur Steigerung der Präzision beim Befüllen eines Formwerkzeugs, einer exakteren Durchflussregulierung und einem sicheren Verschließen der Nadelverschlussdüsen führt.

Hauptmerkmale der Erfindung sind im kennzeichnenden Teil von Anspruch 1 angegeben. Ausgestaltungen sind Gegenstand der Ansprüche 2 bis 13.

Es wird eine Betätigungsvorrichtung für Verschlussnadeln in Spritzgießwerkzeugen mit Nadelverschlussdüsen, mit wenigstens einem bewegbar gelagerten Hubelement, an dem wenigstens zwei Verschlussnadeln festlegbar sind, sodass die Verschlussnadeln über eine Bewegung des Hubelements in eine Öffnungs- und eine Schließstellung bringbar sind, vorgeschlagen. Die Verschlussnadeln sind jeweils in einer Nadelaufnahme mit einer entlang ihrer Längsrichtung justierbaren Relativposition befestigt, wobei die Nadelaufnahmen entlang ihrer Mittelachsen verschiebbar in dem Hubelement angeordnet und jeweils über eine Feder in die Schließstellung gedrängt werden. Die Erfindung sieht vor, dass die Verschlussnadeln einen Schaft auf, der ein erstes Gewinde besitzt, das in ein zweites Gewinde in der Nadelaufnahme einschraubbar ist. Damit kann eine längsaxial justierbare Befestigung der Verschlussnadeln an den zugeordneten Nadelaufnahmen erfolgen.

Die Verschlussnadeln sind folglich nicht fest in dem bewegbar gelagerten Hubelement verschraubt, sondern jeweils in einer Nadelaufnahme festgelegt, welche an dem Hubelement angeordnet ist. Eine Nadelaufnahme kann beispielhaft hohlzylindrisch ausgeführt und an dem Hubelement in einer korrespondierend geformten Führung angeordnet sein. Die Nadelaufnahme ist dazu ausgebildet, einen Flächenkontakt mit der Feder herzustellen, welche sich gleichzeitig an dem Hubelement oder einer damit verbundenen Einrichtung abstützt. Die Nadelaufnahme weist bevorzugt eine Bohrung auf, die sich entlang ihrer Mittelachse erstreckt. Die Bohrung kann eine betreffende Verschlussnadel aufnehmen und halten.

Wird die Hubplatte bewegt, folgt durch Kopplung mit der Feder eine Bewegung der Nadelaufnahme und folglich der Verschlussnadel. Die Feder ist dabei derart anzuordnen, dass die Nadelaufnahme stets in Richtung der Schließstellung der Verschlussnadel gedrängt wird. Erreicht die betreffende Verschlussnadel ihren Dichtsitz, kann das Hubelement dennoch weiter in Richtung der Schließstellung bewegt werden, wobei die Feder durch eine Ausgleichbewegung der Nadelaufnahme komprimiert wird. Dies führt gleichzeitig dazu, dass die Verschlussnadel durch die resultierende, auf die Verschlussnadel wirkende Federkraft in ihren Dichtsitz gedrückt wird. Auch bei einer leichten Kippbewegung des Hubelements kann folglich die Verschlussnadel mit einer dosierten Kraft in ihren Dichtsitz gedrückt werden, sodass dort eine wiederholbar präzise und sichere Dichtwirkung entsteht. Die für eine zuverlässige Dichtwirkung erforderliche Kraft kann durch Anpassung der Federkraft bzw. der Feder an den Hub der Hubplatte und die konkrete Ausführung der Dichtsitze der Nadelverschlussdüsen dimensioniert werden.

Eine justierbare längsaxiale Relativposition einer Verschlussnadel in der Nadelaufnahme kann durch verschiedene Mittel erreicht werden, die eine Befestigung eines länglichen Körpers in einer Bohrung ermöglichen. Hierfür kommen insbesondere Schraubvorrichtungen in Betracht, die auch weiter nachfolgend erläutert werden.

Eine justierbare Relativposition der Verschlussnadeln erlaubt, bei der Verwendung einer Vielzahl von Verschlussnadeln eine individuelle Durchflussregulierung durch einzelne Nadelverschlussdüsen zu schaffen. Einzelne Verschlussnadeln können relativ zueinander und relativ zu einer jeweiligen Öffnungskontur der Nadelverschlussdüse so positioniert werden, dass in einem geöffneten Zustand unterschiedliche Durchflüsse realisiert werden. Die Öffnungskontur der Nadelverschlussdüsen und von Nadelspitzen der Verschlussnadeln können derart aufeinander abgestimmt sein, dass die Position einer Nadelspitze in der ihr zugeordneten Öffnungskontur den Durchfluss direkt beeinflusst.

Insgesamt erlaubt folglich die erfindungsgemäße Betätigungsvorrichtung sowohl eine wiederholbar präzise Dichtwirkung, als auch eine leicht anpassbare individuelle Durchflussregulierung sämtlicher Nadelverschlussdüsen. Ein weiterer besonderer Vorteil liegt darin, dass besonders geringe Baugrößen der Betätigungsvorrichtung realisierbar sind. Diese ermöglichen unter anderem sehr geringe Düsenabstände, die mit individuellen Antrieben einzelner Nadelverschlussdüsen praktisch nicht möglich sind.

Zum Justieren der Relativposition der Verschlussnadel ist eine Rotation des Schafts oder der Nadelaufnahme erforderlich, sodass sich die Gewindegänge des ersten Gewindes und des zweiten Gewindes relativ zueinander bewegen. Durch eine geeignete Auswahl der Gewinde-Steigungen des ersten Gewindes und des zweiten Gewindes kann eine gewünschte Präzision der Justierung erreicht werden. Es ist insbesondere bevorzugt, ein Feingewinde einzusetzen.

In einer vorteilhaften Ausführungsform ist ein Konterelement in das erste Gewinde oder das zweite Gewinde eingeschraubt. Mit diesem kann die Verschlussnadel in einer definierten Position an der Nadelaufnahme verspannt und damit dauerhaft fixiert werden. Die relative Position der Verschlussnadel an der Nadelaufnahme kann dadurch auch bei längerer Verwendung der Betätigungsvorrichtung und bei starken Vibrationen gewährleistet werden. Dennoch ist eine nachträgliche Justierung durch Lösen des Konterelements und anschließendes Bewegen der Verschlussnadel jederzeit möglich. Das Konterelement kann etwa in Form einer Kontermutter realisiert sein, die auf den Schaft der Verschlussnadel aufgeschraubt wird. Alternativ dazu kann das Konterelement auch ähnlich wie eine Madenschraube realisiert sein, die in das zweite Gewinde der Nadelaufnahme eingeschraubt wird und dann auf die Verschlussnadel drückt.

Bevorzugt sind die Nadelaufnahmen jeweils in einer Ausnehmung des Hubelements geführt. Ihre Position entlang der Erstreckung des Hubelements kann dadurch präzise vorgegeben werden. Zudem erlaubt die Anordnung einer Nadelaufnahme in einer Ausnehmung eine leichte axiale Führung der Nadelaufnahme.

Bevorzugt weisen die Nadelaufnahmen jeweils einen umlaufenden Flansch auf, der jeweils mit einem komplementär geformten Absatz in dem Hubelement in Anschlag bringbar ist. Befindet sich das Hubelement in einer Position, in der die Nadelverschlussdüsen geöffnet sind, werden die Flansche der Nadelaufnahmen folglich auf die Absätze gedrückt. Damit werden die Nadelaufnahmen vor dem Herausfallen gesichert und die Verschlussnadeln weisen eine präzise vorbestimmbare Ruheposition auf. Der umlaufende Flansch könnte an einer beliebigen Stelle der Nadelaufnahme angeordnet sein. Es könnte sich jedoch anbieten, die Nadelaufnahme an einem axialen Ende mit dem Flansch auszustatten. Dieses könnte etwa das später zu dem Formwerkzeug gerichtete Ende der Nadelaufnahme sein. Ist die Nadelaufnahme in einer Ausnehmung angeordnet, kann der Absatz als eine Begrenzungsfläche der Ausnehmung ausgeführt sein.

Es ist vorteilhaft, wenn die Nadelaufnahmen jeweils von einem Aufsatz umschlossen sind, der auf dem Hubelement befestigt ist. Ein solcher Aufsatz kann zylinderförmig oder glockenförmig ausgebildet sein. Die Nadelaufnahmen und die Verschlussnadeln werden jeweils durch einen zugehörigen Aufsatz vor mechanischen Beeinträchtigungen geschützt. Der Aufsatz kann ferner ein geöffnetes Ende aufweisen, von dem sich ein im Wesentlichen zylindrischer Abschnitt erstreckt und an einer von dem geöffneten Ende abgewandten Seite zusammenläuft.

Der Aufsatz ist bevorzugt fest mit der Hubplatte verbunden. Der Aufsatz könnte hierzu ein Gewinde aufweisen, das mit einem Gewinde an der Hubplatte korrespondiert. Alternativ dazu wäre auch eine Verwendung von separaten Schraubmitteln denkbar.

Der Aufsatz könnte überdies konzentrisch zu der Nadelaufnahme und folglich über der die Nadelaufnahme aufnehmenden Ausnehmung oder einem mit der Nadelaufnahme in Anschlag bringbaren Absatz angeordnet sein.

Das Hubelement ist im Bereich der Nadelaufnahmen und der zugehörigen Aufsätze mit Durchgangsbohrungen für die Verschlussnadeln versehen. Jede Durchgangsbohrung ist zudem stufenförmig ausgebildet, wobei bevorzugt wenigstens ein Absatz ausgebildet ist. Letzterer bildet die Ausnehmung zur Aufnahme einer Nadelaufnahme, wobei der Durchmesser der Durchgangsbohrung keiner ist als der Durchmesser der Ausnehmnung.

Weitere Vorteile ergeben sich, wenn die Verschlussnadel, die Nadelaufnahme, die Feder sowie die vorangehend genannte Kontermutter insbesondere mithilfe des Aufsatzes eine Einheit mit dem Hubelement bilden. Gemeinsam mit der zugehörigen Durchgangsbohrung ist damit sichergstellt, dass jede Verschlussnadel im montierten Zustand jederzeit justiert und exakt eingestellt werden kann.

Bevorzugt erstrecken sich die Federn jeweils zwischen dem umlaufenden Flansch der betreffenden Nadelaufnahme und einer gegenüberliegenden Innenfläche des Aufsatzes. Die Innenfläche kann ringförmig ausgebildet und mit dem Flansch korrespondierend dimensioniert sein. Der Flansch wird folglich durch Abstützen der Feder an der Innenfläche auf den betreffenden Absatz gedrängt.

Besonders bevorzugt weist der Aufsatz an einem von dem Hubelement abgewandten Ende eine Öffnung auf, durch welche die Verschlussnadel zum Justieren im eingebauten Zustand zugänglich ist. Die Verschlussnadel kann sich durch die Öffnung erstrecken, um außerhalb des Aufsatzes durch Koppeln mit einem Werkzeug gedreht zu werden. Die Öffnung kann allerdings auch derart dimensioniert werden, dass das Werkzeug durch die Öffnung zum Koppeln mit der Verschlussnadel in den Aufsatz einbringbar ist.

In einer vorteilhaften Ausführungsform ragen die Verschlussnadeln durch die Öffnung der betreffenden Aufsätze, sodass sie zur Justierung erreichbar sind.

Besonders bevorzugt weist jede Verschlussnadel an ihrem Schaft eine Werkzeugaufnahme auf, durch die ein Benutzer ein Werkzeug mit der Verschlussnadel koppeln kann. Die Kopplung ist dabei drehfest auszuführen, sodass durch Drehen des Werkzeugs die Verschlussnadel gedreht wird. Ein Verdrehen der Verschlussnadel relativ zu der Nadelaufnahme kann insbesondere bei der vorangehend genannten Ausführung mit dem ersten und zweiten Gewinde zum Justieren der Relativposition führen.

Bevorzugt weist auch das Konterelement eine derartige Werkzeugaufnahme auf. Wird das Konterelement auf das erste Gewinde der Verschlussnadel aufgeschraubt, könnte das dritte Gewinde folglich ein Innengewinde sein und die Werkzeugaufnahme an einer radialen Außenkontur vorliegen. Wird das Konterelement indes in das zweite Gewinde der Nadelaufnahme eingeschraubt, ist das dritte Gewinde folglich ein Außengewinde und die Werkzeugaufnahme könnte insbesondere als eine stirnseitige Vertiefung mit einem nicht kreisrunden Profil ausgebildet sein.

Zum Erleichtern der Justierung der Relativposition der Verschlussnadel ist besonders vorteilhaft, dass die Nadelaufnahme verdrehfest und axial verschiebbar an der Hubplatte geführt ist. Dadurch muss die Nadelaufnahme beim Justieren der Verschlussnadel nicht separat fixiert werden und es können beispielsweise Justiermethoden eingesetzt werden, die auf einer sukzessiven Verdrehung der Verschlussnadeln mit bestimmten Verdrehwinkeln oder Anzahlen von Verdrehungen basieren.

Zusätzlich kann die Betätigungsvorrichtung für zumindest eine der Verschlussnadeln eine Justiereinheit mit einer Antriebseinrichtung aufweisen, wobei die Justiereinheit dazu ausgebildet ist, die Relativposition der betreffenden Verschlussnadel in der zugehörigen Nadelaufnahme zu justieren. Die Justiereinheit kann eine von außen ansteuerbare Antriebseinrichtung aufweisen, die mit der betreffenden Verschlussnadel koppelbar ist. Die Kopplung kann bei Verwendung der vorangehend genannten Gewinde etwa durch Rotieren eines Konterelements oder der Verschlussnadel selbst erfolgen. Es ist vorteilhaft, eine elektrische Antriebseinrichtung zu verwenden, die etwa in Form eines Schrittmotors mit einem daran angeordneten Untersetzungsgetriebe ausgeführt ist. Dies kann zur Vereinfachung des Aufbaus als ein Winkelgetriebe realisiert sein.

Die Erfindung betrifft ferner ein Spritzgießwerkzeug mit wenigstens einer Betätigungsvorrichtung nach der obigen Beschreibung.

Bevorzugt ist die Betätigungsvorrichtung in oder an einer Aufspannplatte bzw. Rahmenplatte ausgebildet. Diese dient zum Abdecken bzw. Aufspannen auf der Spritzgießmaschine.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine Darstellung eines Details einer Betätigungsvorrichtung für Verschlussnadeln in einer dreidimensionalen Darstellung.
- Fig. 2: eine weitere Detaildarstellung der Betätigungsvorrichtung nebst einem Teil einer Aufspannplatte in einer dreidimensionalen Darstellung.
- Fig. 3: eine weitere Detaildarstellung nebst einem Anschlusselement.
- Fig. 4: eine Detailansicht zweier Verschlussnadeln in einer geöffneten Stellung.
- Fig. 5: Nadelspitzen der beiden Verschlussnadeln aus Fig. 4 in der geöffneten Stellung.
- Fig. 6: eine Detailansicht der beiden Verschlussnadeln in einer geschlossenen Stellung.
- Fig. 7: Nadelspitzen der beiden Verschlussnadeln in der geschlossenen Stellung.
- Fig. 8: eine modifizierte Variante der Betätigungsvorrichtung in einem Detailschnitt.

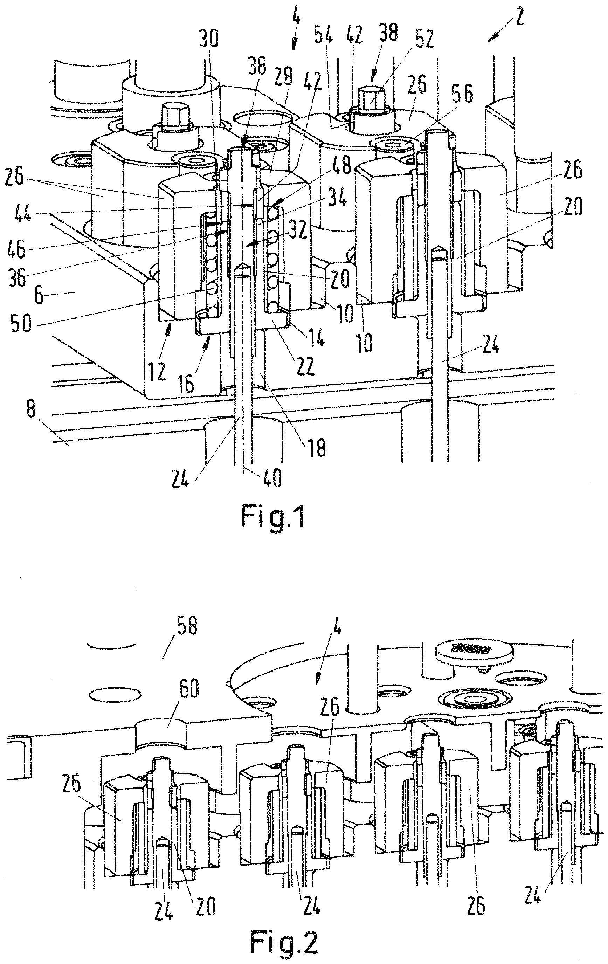

Fig. 1 zeigt ein Detail eines Spritzgießwerkzeugs 2 mit einer Betätigungsvorrichtung 4, die ein Hubelement 6 in Form einer Hubplatte aufweist, welche beispielhaft auf einer Deckplatte 8 eines Formwerkzeugs aufliegt. Die Hubplatte 6 weist mehrere erste Ausnehmungen 10 auf, die beispielhaft kreisrund sind und sich teilweise in die Hubplatte 6 bis zu einem radial nach innen verlaufenden ersten Absatz 12 hinein erstrecken. Nachfolgend werden weitere Merkmale einzelner Elemente erläutert, die jedoch auf alle gleichartigen Elemente der Betätigungsvorrichtung 4 zutreffen können.

In der Tiefenerstreckung der Hubplatte 6 folgt zentriert zu der ersten Ausnehmung 10 eine zweite Ausnehmung 14, die ebenfalls exemplarisch kreisrund ausgeführt ist und sich bis zu einem radial innenliegenden zweiten Absatz 16 in die Hubplatte 6 hinein erstreckt. Der erste Absatz 12 und der zweite Absatz 16 sind ringförmig ausgebildet und umschließen eine Durchgangsbohrung 18, die sich über den restlichen Teil der Hubplatte 6 erstreckt. Die Durchgangsbohrung 18 weist einen geringeren Radius als die zweite Ausnehmung 14 auf, welche weiterhin einen geringeren Radius als die erste Ausnehmung 10 aufweist.

Eine Nadelaufnahme 20 erstreckt sich von der zweiten Ausnehmung 14 durch die erste Ausnehmung 10 über die Hubplatte 6 hinaus und liegt mit einem umlaufenden Flansch 22 auf dem zweiten Absatz 16 auf. Eine Verschlussnadel 24 ist mit der Nadelaufnahme 20 axialfest verbunden und erstreckt sich von der Nadelaufnahme 20 durch die Durchgangsbohrung 18 sowie durch die Abdeckplatte 8 in ein hier nicht dargestelltes Formwerkzeug.

In der ersten Ausnehmung 10 befindet sich ferner ein Aufsatz 26, der die Nadelaufnahme 20 umschließt, auf dem ersten Absatz 12 aufliegt und sich von der Hubplatte 6 nach außen erstreckt. An einem Aufsatzende 28, das von dem ersten Absatz 12 abgewandt ist, befindet sich eine Justieröffnung 30, durch die sich unter anderem die Verschlussnadel 24 erstreckt. Die Verschlussnadel 24 weist einen Schaft 32 auf, der ein erstes Gewinde 34 in Form eines Außengewindes besitzt, das mit einem zweiten Gewinde 36 in Form eines Innengewindes in der Nadelaufnahme 20 im Eingriff steht. Ein Justierende 38 der Verschlussnadel 24 ragt so weit aus dem Aufsatz 26 heraus, dass die Verschlussnadel 24 über ein Werkzeug um eine Mittelachse 40 gedreht werden kann. Durch die Gewinde 34 und 36 erfolgt dadurch eine axiale Justierung der Relativposition der Verschlussnadel 24 und der Nadelaufnahme 20.

Um eine unerwünschte Änderung der einmal eingestellten Relativposition zu verhindern ist exemplarisch ein Konterelement 42 in Form einer Kontermutter 42 vorgesehen, die ein drittes Gewinde 44 in Form eines Innengewindes aufweist. Das Konterelement 42 kann auf das erste Gewinde 34 der Verschlussnadel 24 geschraubt werden, sodass sie mit einem von dem Flansch 22 abgewandten Nadelaufnahmenende 46 in Flächenkontakt kommt und so die Verschlussnadel 24 an der Nadelaufnahme 20 verspannt. Auch das Konterelement 42 ragt aus der Justieröffnung 30 aus dem Aufsatz 26 heraus. Ein Benutzer kann von außen folglich nicht nur die Verschlussnadel 24 drehen, sondern auch das Konterelement 42 anbringen oder entnehmen, ohne den Aufsatz 26 demontieren zu müssen.

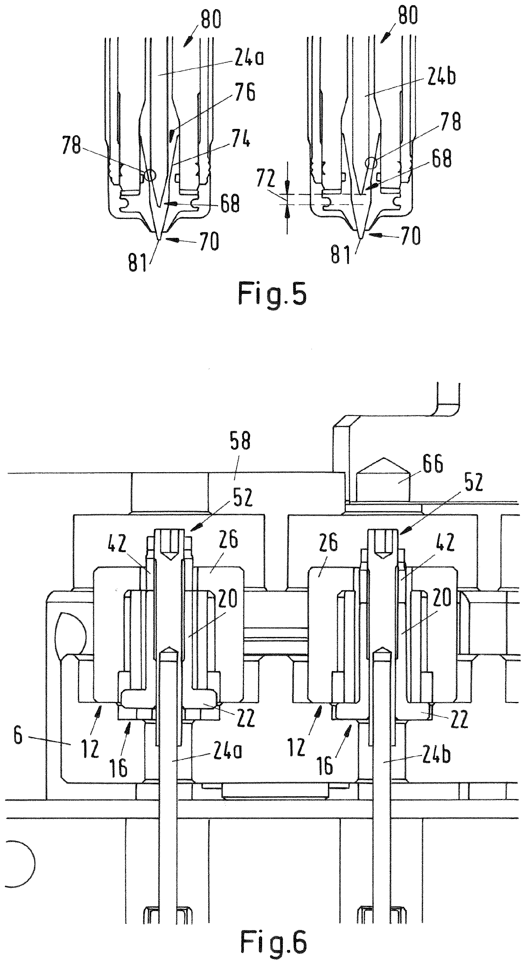

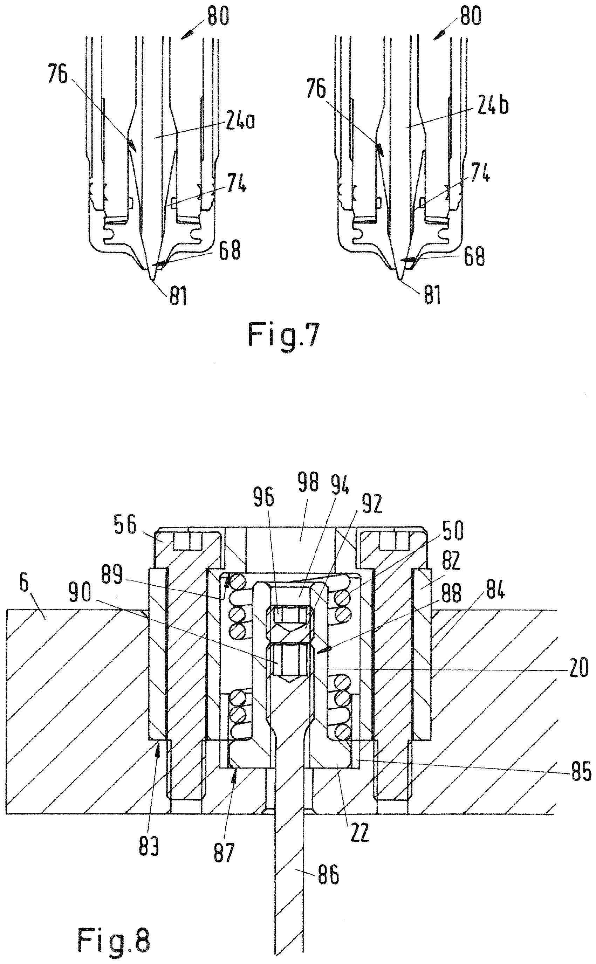

Zwischen dem Flansch 22 und einer Innenfläche 48 des Aufsatzes 26 ist eine Feder 50 angeordnet, die den Flansch 22 stets in Richtung der Hubplatte 6 auf den zweiten Absatz 16 drängt. Die Verschlussnadel 24 wird dadurch folglich in eine Schließrichtung gedrängt, wie weiter nachfolgend insbesondere anhand von Fig. 5 und 7 deutlich wird. Durch die Anordnung der Nadelaufnahme 20 in der ersten Ausnehmung 10 kann die Nadelaufnahme 20 entlang ihrer Mittelachse bewegt werden. Durch die Federkraft wird sie jedoch stets auf den ersten Absatz 12 gedrängt.

Die Hubplatte 6 wird durch einen hier nicht gezeigten Mechanismus angetrieben, der zu einem selektiven Beabstanden der Hubplatte 6 von der Abdeckplatte 8 führt. Durch die Anbindung der Nadelaufnahmen 20 sowie der Aufsätze 26 an der Hubplatte 6 folgen sämtliche Nadelaufnahmen 20 der Bewegung der Hubplatte 6, was folglich auch in einer Bewegung der Verschlussnadeln 24 resultiert. Ziel der längsaxialen Justiermöglichkeit der einzelnen Verschlussnadeln 24 ist, ihre Ruheposition bei angehobenem Hubelement 6 einzustellen, was zu einer vorteilhaften Durchflussregulierung der einzelnen Nadelverschlussdüsen führt, welche von den Verschlussnadeln 24 verschließbar sind. Die Federn 50 drängen indes die Verschlussnadeln 24 jeweils sicher in ihren Dichtsitz, wenn sich das Hubelement 6 in einer abgesenkten Position befindet.

In der Darstellung von Fig. 1 sind weitere Aufsätze 26 ersichtlich, durch die sich jeweils ein Konterelement 42 und ein Justierende 38 einer Verschlussnadel 24 erstreckt. Das Justierende 38 weist zur Justierung der Verschlussnadel 24 eine Werkzeugaufnahme 52 auf, die beispielhaft in Form eines Sechskants ausgeführt ist. Das Konterelement 42 weist indes seitliche Nute 54 als eine Werkzeugaufnahme auf, um bedarfsweise mit einem korrespondierend ausgebildeten Nutmutternschlüssel das Konterelement 42 zu lösen. Beispielhaft sind die Aufsätze 26 jeweils über zwei Schrauben 56 in der Hubplatte 6 verschraubt. Durch die Werkzeugaufnahmen 52 und 54 kann eine individuelle Justierung der einzelnen Verschlussnadeln 24 durchgeführt werden, ohne die Betätigungsvorrichtung 4 zu zerlegen.

Fig. 2 zeigt eine Aufspannplatte 58 der Betätigungsvorrichtung 4, die zur Festlegung einer die Betätigungsvorrichtung 4 aufweisenden Werkzeughälfte in einer Spritzgießmaschine 2 dient. Die Aufspannplatte 58 weist Zugangsöffnungen 60 auf, um zur bedarfsweisen Justierung der Verschlussnadeln 24 ein Werkzeug durch die Zugangsöffnungen 60 zu den Verschlussnadeln 24 zu führen. Hierzu sind die Zugangsöffnungen 60 mit den einzelnen Verschlussnadeln 24 bzw. den Justieröffnungen 30 der Aufsätze 26 fluchtend angeordnet.

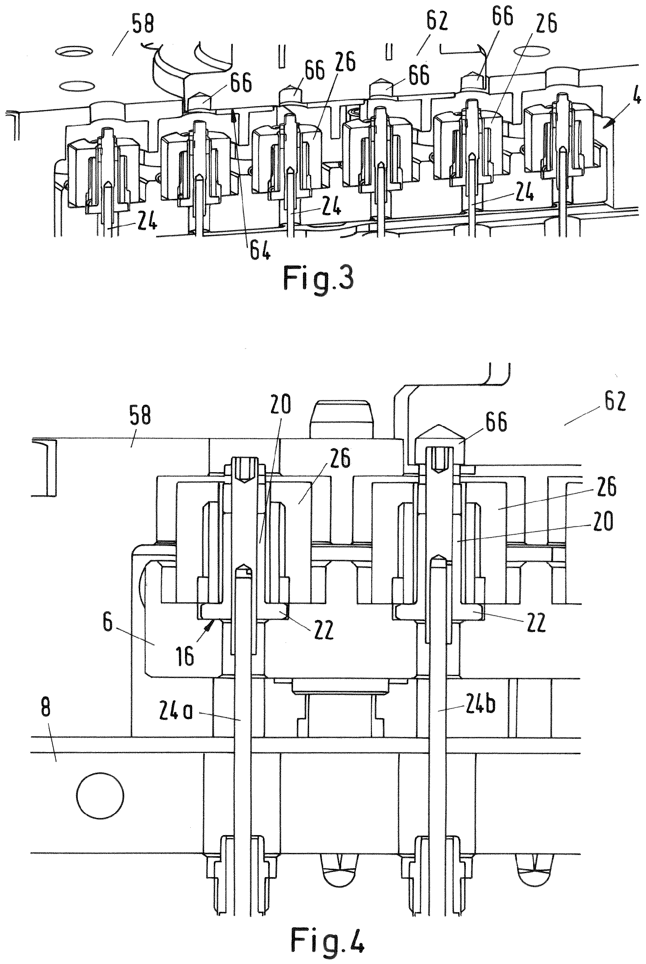

Fig. 3 zeigt eine weitere Ansicht der Aufspannplatte 58 mit der darin angeordneten Betätigungsvorrichtung 4 sowie einer Vielzahl von Verschlussnadeln 24. An der Aufspannplatte 58 befindet sich ein Anschlusselement 62, das an einer zu den Verschlussnadeln 24 gewandten Unterseite 64 mehrere Ausnehmungen 66 aufweist, die mit den darunter liegenden Verschlussnadeln 24 fluchten. Die Ausnehmungen 66 gestatten eine Hubbewegung der Verschlussnadeln 24, wenn sich das Hubelement 6 der Abdeckplatte 8 nähert und sich die Nadelaufnahmen 20 gegen eine Federkraft leicht von dem Hubelement 6 lösen.

Fig. 4 zeigt die Hubplatte 6 in einer gegenüber der Abdeckplatte 8 angehobenen Stellung, bei der sich zwei Verschlussnadeln 24a und 24b folglich in ihrer Ruhestellung befinden und jeweils eine Nadelverschlussdüse öffnen. Hier wird deutlich, dass beide in Fig. 4 sichtbaren Flansche 22 durch Federkraft der Federn 50 auf dem Absatz 16 aufliegen. Die Verschlussnadeln 24a und 24b werden demnach so weit durch die Hubplatte 6 gedrängt, wie es ihre individuelle Justierung erlaubt. Die Verschlussnadeln 24a und 24b weisen hier jeweils eine in Form eines Innensechskants ausgeführte Werkzeugaufnahme 52 auf.

Fig. 5 zeigt die beiden Verschlussnadeln 24a und 24b jeweils als Teil einer Nadelverschlussdüseneinheit 80. Jede in den vorherigen Figuren gezeigte Verschlussnadel 24 kann Teil einer solchen Nadelverschlussdüseneinheit 80 sein. In dem hier gezeigten Beispiel weisen beide Verschlussnadeln 24 jeweils eine Nadelspitze 68 auf, die in einen Dichtsitz 70 einer Nadelverschlussdüse 81 zu bringen ist, um eine Abdichtung eines durch die Nadelverschlussdüse 81 erstreckenden Strömungskanals zu erreichen. Hier ist aufgrund unterschiedlicher Justierungen der Verschlussnadeln 24a und 24b in ihren Nadelaufnahmen 20 die Nadelspitze 68 der linken Verschlussnadel 24a etwas niedriger, d.h. etwas dichter an dem zugehörigen Dichtsitz 70 angeordnet, als die Nadelspitze 68 der rechten Verschlussnadel 24b. Folglich weisen die beiden Verschlussnadeln 24a und 24b einen vertikalen Versatz 72 zueinander auf, der exemplarisch etwa 5 mm betragen könnte.

Die Nadelverschlussdüseneinheit 80 weist in ihrem zu dem Dichtsitz 70 gewandten Bereich eine Öffnungskontur 74 auf, welche einen nach oben geöffneten Einlaufbereich 76 und eine zu dem Dichtsitz 70 hin zunehmende Verjüngung aufweist. Hierdurch ergibt sich jeweils ein durchströmbarer Ringspalt 78 zwischen der Verschlussnadel 24a bzw. 24b und der zugehörigen Öffnungskontur 74. Je weiter eine Nadelspitze 68 in ihrem geöffneten Zustand in Richtung ihres Dichtsitzes 70 positioniert ist, desto schmaler wird der betreffende Ringspalt 74. Durch Variation der Position einer Nadelspitze 68 kann folglich eine Durchflussregulierung erfolgen. Wird das Hubelement 6 gemäß Fig. 4 angehoben, befinden sich sämtliche daran angebundene Verschlussnadeln 24 in ihrem vorbestimmten, vollständig geöffneten Zustand. Durch die individuellen Justierungen ihrer Relativpositionen zu den zugehörigen Nadelaufnahmen 20 werden folglich unterschiedliche Durchflüsse durch individuelle Abstimmungen der Ringspalte 78 eingestellt.

Wird das Hubelement 6 gemäß Fig. 6 wieder in Richtung der Abdeckplatte 8 gesenkt, werden sämtliche Verschlussnadeln 24 in ihren Dichtsitz 70 bewegt, wie in Fig. 7 ersichtlich. Die Hubbewegung des Hubelements 6 überschreitet jedoch bevorzugt bei allen Verschlussnadeln 24 den erforderlichen Verfahrweg der einzelnen Nadelspitzen 68, sodass sich die Flansche 22 der jeweiligen Nadelaufnahmen 20 nach Erreichen der betreffenden Dichtsitze 70 von dem zweiten Absatz 16 lösen und nach und nach zu einer Komprimierung der Federn 50 führen. Folglich sind sämtliche Nadelverschlussdüsen 81 bei abgesenkter Hubplatte 6 geschlossen und die Nadelspitzen 68 werden durch die Federkraft zusätzlich in ihre Dichtsitze 70 gedrückt, um die Dichtwirkung zu erhöhen.

Die Darstellung in Fig. 6 zeigt zur Illustration der Justiermöglichkeiten einen deutlichen Unterschied der Positionen der Verschlussnadeln 24a und 24b. Hier zeigt sich, dass sich aufgrund der unterschiedlichen Justierung der Verschlussnadeln 24a und 24b beide Nadelaufnahmen 20 in unterschiedlichen Endstellungen befinden. Wie Fig. 7 zeigt, befinden sich jedoch beide Nadelspitzen 68 in ihrem jeweiligen Dichtsitz 70. Da die Nadelspitze 68 der linken Nadelverschlussdüse 81 etwas weiter aus der betreffenden Nadelaufnahme 20 ragt, muss die linke Nadelaufnahme 20 die betreffende Feder 50 um eine größere Strecke komprimieren, als die rechte Nadelaufnahme 20.

Schließlich zeigt Fig. 8 eine etwas abgewandelte Variante eines Aufsatzes 82, der bündig auf einem ersten Absatz 83 in einer ersten Ausnehmung 84 des Hubelements 6 angeordnet ist. Die Nadelaufnahme 20 befindet sich in einer zweiten Ausnehmung 85 und liegt in der Darstellung auf einem zweiten Absatz 87 auf und wird von dem Aufsatz 82 umschlossen. Die Feder 50 erstreckt sich von dem Flansch 22 zu einer Innenfläche 89 des Aufsatzes 82, der durch Schrauben 56 mit dem Hubelement 6 verbunden ist.

Eine Verschlussnadel 86 ist an der Nadelaufnahme 20 angeordnet und ragt allerdings nicht vollständig durch die Nadelaufnahme 20 hindurch bzw. über die Nadelaufnahme 20 hinaus. Stattdessen weist sie an einem Justierende 88 eine innerhalb der Nadelaufnahme 20 befindliche Werkzeugaufnahme 90 auf, die beispielhaft als eine Vertiefung mit einem nicht kreisrunden Profil zur Übertragung eines Drehmoments ausgebildet ist. In diese könnte etwa ein Sechskantschlüssel eingesteckt werden, um die Verschlussnadel 86 zu drehen.

Gleichermaßen ist ein Konterelement 92 ausgebildet, das ebenso an einem axialen Ende 94 eine Werkzeugaufnahme 96 aufweist, die mit einem Werkzeug verbindbar ist. Das Konterelement 92 weist ein drittes Gewinde 93 auf, das als Außengewinde realisiert ist. Es kann derart in die Nadelaufnahme 20 eingeschraubt werden, dass das dritte Gewinde 93 mit dem zweiten Gewinde 36 der Nadelaufnahme 20 in Eingriff kommt. Durch Einschrauben gerät das Konterelement 92 in einen Flächenkontakt mit dem Justierende 88 der Verschlussnadel 86, so dass es dort die Verschlussnadel 86 in der Nadelaufnahme 20 verspannt. Das Konterelement 92 kann so ausgeführt sein, dass es vollständig in der Nadelaufnahme 20 verschwindet. Weder die Verschlussnadel 86 noch das Konterelement 92 ragen folglich über die Nadelaufnahme 20 hinaus. Das Justieren der Verschlussnadel 86 kann durch Entfernen des Konterelements 92 durch Herausschrauben desselben ermöglicht werden. Das Werkzeug kann durch eine Justieröffnung 98 zu dem Konterelement 92 bzw. der Verschlussnadel 86 gebracht werden. Diese Ausführung kann etwas kompakter ausgeführt sein, als die in den vorherigen Ausführungsbeispielen. Das Wirkungsprinzip ist jedoch identisch.

### Bezugszeichenliste

- 2: Spritzgießwerkzeug
- 4: Betätigungsvorrichtung
- 6: Hubelement / Hubplatte
- 8: Abdeckplatte
- 10: erste Ausnehmung
- 12: erster Absatz
- 14: zweite Ausnehmung
- 16: zweiter Absatz
- 18: Durchgangsbohrung
- 20: Nadelaufnahme
- 22: Flansch
- 24: Verschlussnadel
- 26: Aufsatz
- 28: Aufsatzende
- 30: Justieröffnung
- 32: Schaft
- 34: erstes Gewinde (Außengewinde der Verschlussnadel)
- 36: zweites Gewinde (Innengewinde der Nadelaufnahme)
- 38: Justierende
- 40: Mittelachse
- 42: Konterelement
- 44: drittes Gewinde (Innengewinde des Konterelements)
- 46: Nadelaufnahmenende
- 48: Innenfläche
- 50: Feder
- 52: Werkzeugaufnahme / Sechskant
- 54: Werkzeugaufnahme / seitliche Einschnitte
- 56: Schraube
- 58: Aufspannplatte
- 60: Zugangsöffnung
- 62: Anschlusselement
- 64: Unterseite
- 66: Ausnehmung
- 68: Nadelspitze
- 70: Dichtsitz
- 72: vertikaler Versatz
- 74: Öffnungskontur
- 76: Einlaufbereich
- 78: Ringspalt
- 80: Nadelverschlussdüseneinheit
- 81: Nadelverschlussdüse
- 82: Aufsatz
- 83: erster Absatz
- 84: erste Ausnehmung
- 85: zweite Ausnehmung
- 86: Verschlussnadel
- 87: zweiter Absatz
- 88: Justierende
- 89: Innenfläche
- 90: Werkzeugaufnahme
- 92: Konterelement
- 93: drittes Gewinde
- 94: axiales Ende
- 96: Werkzeugaufnahme
- 98: Justieröffnung

## Patentansprüche

1. Betätigungsvorrichtung (4) für Verschlussnadeln (24, 86) in Spritzgießwerkzeugen (2) mit Nadelverschlussdüsen (81), mit wenigstens einem bewegbar gelagerten Hubelement (6), an dem wenigstens zwei Verschlussnadeln (24, 86) festlegbar sind, sodass die Verschlussnadeln (24, 86) über eine Bewegung des Hubelements (6) in eine Öffnungs- und eine Schließstellung bringbar sind, und die Verschlussnadeln (24, 86) jeweils in einer Nadelaufnahme (20) mit einer entlang ihrer Längsrichtung justierbaren Relativposition befestigt sind, wobei die Nadelaufnahmen (20) entlang ihrer Mittelachsen verschiebbar in dem Hubelement (6) angeordnet und jeweils über eine Feder (50) in die Schließstellung gedrängt werden,
**dadurch gekennzeichnet, dass** die Verschlussnadeln (24, 86) einen Schaft (32) aufweisen, der ein erstes Gewinde (34) besitzt, das in ein zweites Gewinde (36) in der Nadelaufnahme (20) einschraubbar ist.

2. Betätigungsvorrichtung (4) nach Anspruch 1, **dadurch gekennzeichnet, dass** ein Konterelement (42, 92) in das erste Gewinde (34) oder das zweite Gewinde (36) eingeschraubt ist und die Verschlussnadel (24, 86) an der Nadelaufnahme (20) verspannt.

3. Betätigungsvorrichtung (4) nach einem der vorhergehenden Ansprüche, **dadurch gekennzeichnet, dass** die Nadelaufnahmen (20) jeweils in einer Ausnehmung (14, 85) des Hubelements (6) geführt sind.

4. Betätigungsvorrichtung (4) nach einem der vorhergehenden Ansprüche, **dadurch gekennzeichnet, dass** die Nadelaufnahmen (20) jeweils einen umlaufenden Flansch (22) aufweisen, der jeweils mit einem komplementär geformten Absatz (16, 87) in dem Hubelement (6) in Anschlag bringbar ist.

5. Betätigungsvorrichtung (4) nach einem der vorhergehenden Ansprüche, **dadurch gekennzeichnet, dass** die Nadelaufnahmen (20) jeweils von einem glockenförmigen Aufsatz (26, 82) umschlossen sind, der auf dem Hubelement (6) befestigt ist.

6. Betätigungsvorrichtung (4) nach Anspruch 5, **dadurch gekennzeichnet, dass** sich die Federn (50) jeweils zwischen dem umlaufenden Flansch (22) der betreffenden Nadelaufnahme (20) und einer gegenüberliegenden Innenfläche (48, 89) des Aufsatzes (26, 82) erstrecken.

7. Betätigungsvorrichtung (4) nach Anspruch 1 oder 2 und 6, **dadurch gekennzeichnet, dass** der Aufsatz (26, 82) an einem von dem Hubelement (6) abgewandten Ende eine Justieröffnung (30, 98) aufweist, durch die die Verschlussnadel (24, 86) zum Justieren zugänglich ist.

8. Betätigungsvorrichtung (4) nach Anspruch 7, **dadurch gekennzeichnet, dass** die Verschlussnadeln (24, 86) durch die Justieröffnung (30, 98) der betreffenden Aufsätze (26, 82) ragen.

9. Betätigungsvorrichtung (4) nach einem der vorhergehenden Ansprüche, **dadurch gekennzeichnet, dass** jede Verschlussnadel (24, 86) eine Werkzeugaufnahme (52, 90) aufweist, die mit einem Werkzeug koppelbar ist.

10. Betätigungsvorrichtung (4) nach Anspruch 1, **dadurch gekennzeichnet, dass** die Nadelaufnahme (20) verdrehfest und axial verschiebbar an dem Hubelement (6) geführt ist.

11. Betätigungsvorrichtung (4) nach einem der vorhergehenden Ansprüche, **dadurch gekennzeichnet, dass** die Betätigungsvorrichtung (4) für zumindest eine der Verschlussnadeln (24, 86) eine Justiereinheit mit einer Antriebseinrichtung aufweist, wobei die Justiereinheit dazu ausgebildet ist, die Relativposition der betreffenden Verschlussnadel (24, 86) in der zugehörigen Nadelaufnahme (20) zu justieren.

12. Spritzgießwerkzeug (2) mit wenigstens einer Betätigungsvorrichtung (4) nach einem der Ansprüche 1 bis 11.

13. Spritzgießwerkzeug (2) nach Anspruch 12 **dadurch gekennzeichnet, dass** die Betätigungsvorrichtung (4) in oder an einer Aufspannplatte (58) ausgebildet ist.

## Claims

1. Actuating device (4) for shut-off needles (24, 86) in injection molds (2) with needle shut-off nozzles (81), with at least one movably mounted lifting element (6), to which at least two shut-off needles (24, 86) can be fixed, so that the shut-off needles (24, 86) can be brought into an open and a closed position by a movement of the lifting element (6), and the closure needles (24, 86) are each attached in a needle receptacle (20) that can be adjusted relative to their longitudinal direction, wherein the needle receptacles (20) are arranged movably along their center axes in the lifting element (6) and are each driven into the closed position by a spring (50), **characterized in that** the closure needles (24, 86) comprise a shank (32) having a first thread (34) adapted to be screwed into a second thread (36) in the needle receptacle (20).

2. Actuating device (4) according to claim 1, **characterized in that** a counter element (42, 92) is screwed into the first thread (34) or the second thread (36) and braces the closing needle (24, 86) against the needle receptacle (20).

3. Actuating device (4) according to one of the preceding claims, **characterized in that** the needle receptacles (20) are each guided in a recess (14, 85) of the lifting element (6).

4. Actuating device (4) according to one of the preceding claims, **characterized in that** the needle receptacles (20) each have a circumferential flange (22) that can be brought into abutment with a complementarily shaped shoulder (16, 87) in the lifting element (6).

5. Actuating device (4) according to one of the preceding claims, **characterized in that** the needle receptacles (20) are each surrounded by a bell-shaped attachment (26, 82) fixed to the lifting element (6).

6. Actuating device (4) according to claim 5, **characterized in that** the springs (50) each extend between the circumferential flange (22) of the respective needle receptacle (20) and an opposite inner surface (48, 89) of the attachment (26, 82).

7. Actuating device (4) according to claim 1 or 2 and 6, **characterized in that** the attachment (26, 82) has, at an end facing away from the lifting element (6), an adjustment opening (30, 98), through which the closing needle (24, 86) is accessible for adjustment.

8. Actuating device (4) according to claim 7, **characterized in that** the closing needles (24, 86) protrude through the adjustment opening (30, 98) of the respective attachments (26, 82).

9. Actuating device (4) according to any of the preceding claims, **characterized in that** each closing needle (24, 86) has a tool receptacle (52, 90) which can be coupled to a tool.

10. Actuating device (4) according to claim 1, **characterized in that** the needle receptacle (20) is guided non-rotatably and axially movably on the lifting element (6).

11. Actuating device (4) according to one of the preceding claims, **characterized in that** the actuating device (4) for at least one of the closing needles (24, 86) has an adjusting unit with a drive device, wherein the adjusting unit is designed for adjusting the relative position of the respective closing needle (24, 86) in the associated needle receptacle (20).

12. Injection molding tool (2) with at least one actuating device (4) according to one of claims 1 to 11.

13. Injection molding tool (2) according to claim 12, **characterized in that** the actuating device (4) is formed in or on a clamping plate (58).

## Revendications

1. Dispositif d'actionnement (4) pour des aiguilles de fermeture (24, 86) dans des outils de moulage par injection (2) avec des buses de fermeture d'aiguille (81), avec au moins un élément de levage (6) monté de manière mobile, sur lequel au moins deux aiguilles de fermeture (24, 86) peuvent être fixées, de sorte que les aiguilles de fermeture (24, 86) peuvent être amenées dans une position ouverte et une position fermée par un mouvement de l'élément de levage (6), et les aiguilles de fermeture (24, 86) sont chacune fixées dans un logement d'aiguille (20) avec une position relative ajustable le long de leur direction longitudinale, les logements d'aiguille (20) étant positionnés de manière mobile selon leurs axes centraux dans l'élément de levage (6) et étant chacun poussés en position fermée par un ressort (50), **caractérisé en ce que** les aiguilles de fermeture (24, 86) comportent une tige (32) ayant un premier filetage (34) adapté pour être vissé dans un second filetage (36) dans le logement d'aiguille (20).

2. Dispositif d'actionnement (4) selon la revendication 1, **caractérisé en ce qu'**un élément de blocage (42, 92) est vissé dans le premier filetage (34) ou le deuxième filetage (36) et serre l'aiguille de fermeture (24, 86) sur le logement d'aiguille (20).

3. Dispositif d'actionnement (4) selon l'une des revendications précédentes, **caractérisé en ce que** les logements d'aiguille (20) sont chacun guidés dans un évidement (14, 85) de l'élément de levage (6).

4. Dispositif d'actionnement (4) selon l'une des revendications précédentes, **caractérisé en ce que** les logements d'aiguille (20) présentent chacun une bride périphérique (22) qui peut être amenée en butée respectivement avec un épaulement (16, 87) de forme complémentaire dans l'élément de levage (6).

5. Dispositif d'actionnement (4) selon l'une quelconque des revendications précédentes, **caractérisé en ce que** les logements d'aiguille (20) sont chacun entourés par une attache en forme de cloche (26, 82) fixé sur l'élément de levage (6).

6. Dispositif d'actionnement (4) selon la revendication 5, **caractérisé en ce que** les ressorts (50) s'étendent chacun entre le rebord périphérique (22) du logement d'aiguille (20) concerné et une surface intérieure opposée (48, 89) de l'attache (26, 82).

7. Dispositif d'actionnement (4) selon les revendications 1 ou 2 et 6, **caractérisé en ce que** l'attache (26, 82) présente, à une extrémité opposée à l'élément de levage (6), une ouverture d'ajustage (30, 98) à travers laquelle l'aiguille de fermeture (24, 86) est accessible pour l'ajustage.

8. Dispositif d'actionnement (4) selon la revendication 7, **caractérisé en ce que** les aiguilles de fermeture (24, 86) font saillie à travers l'ouverture d'ajustement (30, 98) des attaches concernés (26, 82).

9. Dispositif d'actionnement (4) selon l'une quelconque des revendications précédentes, **caractérisé en ce que** chaque aiguille de fermeture (24, 86) comporte un logement d'outil (52, 90) apte à être couplé à un outil.

10. Dispositif d'actionnement (4) selon la revendication 1, **caractérisé en ce que** le logement d'aiguille (20) est guidé de manière non rotative et axialement mobile sur l'élément de levage (6).

11. Dispositif d'actionnement (4) selon l'une des revendications précédentes, **caractérisé en ce que** le dispositif d'actionnement (4) pour au moins l'une des aiguilles de fermeture (24, 86) comporte une unité d'ajustage avec un dispositif d'entraînement, l'unité d'ajustage étant conçue pour ajuster la position relative de l'aiguille de fermeture (24, 86) concernée dans le logement d'aiguille (20) associé.

12. Outil de moulage par injection (2) comportant au moins un dispositif d'actionnement (4) selon l'une des revendications 1 à 11.

13. Outil de moulage par injection (2) selon la revendication 12, **caractérisé en ce que** le dispositif d'actionnement (4) est formé dans ou sur une plaque de serrage (58).
